# EUROPEAN PATENT APPLICATION

(11) **EP 4 411 625 A1**
(43) Date of publication of application: **07.08.2024**
(21) Application number: 22876490.8
(22) Date of filing: 29.09.2022
(51) Int. Cl.: G06Q 50/10

(54) **COMPUTER SYSTEM, METHOD, AND PROGRAM FOR DETERMINING OPTIMAL COMMUNICATION COUNTERPART IN ORDER TO ASSIST ONE INDIVIDUAL TOGETHER WITH ANOTHER**

(30) Priority: 30.09.2021 JP 2021161785
(71) Applicant: KAKEAI, Inc., Tokyo, 107-0052 (JP)
(72) Inventor: HONDA, Hidetaka, Tokyo 107-0061 (JP); MORI, Hirokazu, Tokyo 107-0061 (JP)
(74) Representative: Grünecker Patent- und Rechtsanwälte PartG mbB
(86) International application number: PCT/JP2022/036549
(87) International publication number: WO 2023/054627

(57) **Abstract**

A computer system for determining a communication counterpart according to the present invention is configured to perform: receiving (S601) the content of communication desired by a user; designating (S602) a first feature that the communication counterpart should have, on the basis of the result of communication that was performed in the past by the user and/or the result of communication that was performed in the past by another user who is similar to the user; and determining (S603) at least one counterpart on the basis of the content of communication desired by the user and the first feature.

## Description

### Technical Field

The present invention relates to a computer system, a method, and a program for determining a partner of communication. More specifically, the present invention relates to a computer system, a method, and a program for determining a person to consult on a trouble regarding work.

### Background Art

In organizations, interviews are often performed between bosses and subordinates. The interviews are performed for the purpose of, for example, target setting, progress management, accomplishment report, and the like, of the subordinates. A system for supporting such interviews is known (Patent Literature 1).

Such interviews include an interview called "1on1 meeting" (or "1on1") which is performed between a boss and a subordinate one-on-one. "1on1" is performed for the purpose of encouraging growing up of the subordinate by the subordinate having a dialogue with the boss under the initiative of the subordinate. For example, in "1on1", the subordinate can consult with the boss on a trouble regarding work.

### Citation List

### Patent Literature

Patent Literature 1: Japanese Patent Laid-Open No. 2006-190162

### Summary of Invention

### Technical Problem

The inventors of the present invention have considered that by expanding "1on1" between a subordinate and a boss to communication with at least one arbitrary partner including people outside a specific enterprise, without limiting the communication to communication between the subordinate and the boss within the specific enterprise, a user (or consulter) can receive various advices that are free from ideas within the specific enterprise or can expose himself/herself to various ways of thinking of various people.

The present invention has been made in view of this and is directed to providing a computer system, and the like, for determining a partner of communication.

### Solution to Problem

The present invention provides, for example, the following items in one embodiment.

### (Item 1)

A computer system for determining a partner of communication, the computer system including
a receiving means that receives content of communication desired by a user,
a specifying means that specifies a first feature that the partner of the communication should have based on results of communication performed by the user in the past and/or results of communication performed by other users similar to the user in the past, and
a determining means that determines at least one partner based on the content of the communication desired by the user and the first feature.

### (Item 2)

The computer system according to item 1,
in which the determining means extracts a plurality of candidates for the partner based on the content of the communication desired by the user and the first feature,
for each candidate for the partner of the plurality of candidates for the partner, specifies a second feature that a partner should have in communication with the candidate for the partner based on results of communication performed by the candidate for the partner in the past, and
determines the at least one partner from the plurality of candidates for the partner based on whether or not the user has the second feature of each of the plurality of candidates for the partner.

### (Item 3)

The computer system according to item 1 or 2,
in which the content of the communication desired by the user includes a topic that the user wants to talk about in the communication and/or response of the partner desired by the user in the communication.

### (Item 4)

The computer system according to any one of items 1 to 3,
in which the first feature includes a feature regarding a job.

### (Item 5)

The computer system according to item 4,
in which the feature regarding the job includes a career.

### (Item 6)

The computer system according to item 5,
in which the receiving means further receives content of a career desired by the user, and
the determining means determines the at least one partner further based on the content of the career.

### (Item 7)

The computer system according to any one of items 1 to 6, further including
a requesting means that transmits a request for communication with the user to the determined at least one partner, and
a presenting means that presents the at least one partner who has approved the request to the user as the partner of the communication in response to approval of the request by the at least one partner.

### (Item 8)

The computer system according to item 7,
in which the user is anonymously indicated in the request, and
the at least one partner is anonymously presented to the user.

### (Item 9)

A method for determining a partner of communication, including
receiving content of communication desired by a user,
specifying a first feature that the partner of the communication should have based on results of communication performed by the user in the past and/or results of communication performed by other users similar to the user in the past, and
determining at least one partner based on the content of the communication desired by the user and the first feature.

### (Item 9A)

The method according to item 9, including features according to one or more items among the above-described items.

### (Item 10)

A program for determining a partner of communication, the program being executed in a computer system including a processor unit, and the program causing the processor unit to execute processing including
receiving content of communication desired by a user,
specifying a first feature that the partner of the communication should have based on results of communication performed by the user in the past and/or results of communication performed by other users similar to the user in the past, and
determining at least one partner based on the content of the communication desired by the user and the first feature.

### (Item 10A)

The program according to item 10, including features according to one or more items among the above-described items.

### (Item 10B)

A computer-readable storage medium that stores the program according to item 10 or item 10A.

### (Item 11)

A computer system for determining a partner of communication, the computer system including
a receiving means that receives content of communication desired by a user,
a database unit that stores evaluation of communication performed by a plurality of users in the past and features of the plurality of users,
a specifying means that, based on evaluation of communication performed by the user in the past and/or evaluation of communication performed by other users similar to the user in the past with reference to the database unit, specifies a person who is highly evaluated by the user or the other users and specifies features of the specified person as a first feature that the partner of the communication should have, and
a determining means that determines at least one partner based on the content of the communication desired by the user and the first feature.

### (Item 12)

A computer system for determining a partner of communication, the computer system including
a receiving means that receives content of communication desired by a user,
a database unit that stores results of communication performed by a plurality of users in the past and features of the plurality of users,
a specifying means that specifies a first feature that the partner of the communication should have based on results of communication performed by the user in the past and/or results of communication performed by other users similar to the user in the past with reference to the database unit, and
a determining means that determines at least one partner based on the content of the communication desired by the user and the first feature,
in which the determining means extracts a plurality of candidates for the partner based on the content of the communication desired by the user and the first feature,
for each candidate for the partner of the plurality of candidates for the partner, specifies a second feature that a partner should have in communication with the candidate for the partner based on results of communication performed by the candidate for the partner in the past with reference to the database unit, and
determines the at least one partner from the plurality of candidates for the partner based on whether or not the user has the second feature of each of the plurality of candidates for the partner.

### (Item 12A)

The computer system according to item 11 or 12, including features according to one or more items among the above-described items.

### (Item 13)

A method for determining a partner of communication, the method being executed in a computer system including a processor unit and a database unit, the database unit storing evaluation of communication performed by a plurality of users in the past and features of the plurality of users, the method including
the processor unit receiving content of communication desired by a user,
the processor unit, based on evaluation of communication performed by the user in the past and/or evaluation of communication performed by other users similar to the user in the past with reference to the database unit, specifying a person who is highly evaluated by the user or the other users and specifying features of the specified person as a first feature that the partner of the communication should have, and
the processor unit determining at least one partner based on the content of the communication desired by the user and the first feature.

### (Item 14)

A method for determining a partner of communication, the method being executed in a computer system including a processor unit and a database unit, the database unit storing results of communication performed by a plurality of users in the past and features of the plurality of users, and the method including
the processor unit receiving content of communication desired by a user,
the processor unit specifying a first feature that the partner of the communication should have based on results of communication performed by the user in the past and/or results of communication performed by other users similar to the user in the past with reference to the database unit, and
the processor unit determining at least one partner based on the content of the communication desired by the user and the first feature,
in which the determining including
extracting a plurality of candidates for the partner based on the content of the communication desired by the user and the first feature,
for each candidate for the partner of the plurality of candidates for the partner, specifying a second feature that a partner should have in communication with the candidate for the partner based on results of communication performed by the candidate for the partner in the past with reference to the database unit, and
determining the at least one partner from the plurality of candidates for the partner based on whether or not the user has the second feature of each of the plurality of candidates for the partner.

### (Item 14A)

The method according to item 13 or 14, including features according to one or more items among the above-described items.

### (Item 15)

A program for determining a partner of communication, the program being executed in a computer system including a processor unit and a database unit, the database unit storing evaluation of communication performed by a plurality of users in the past and features of the plurality of users, and the program causing the processor unit to execute processing including
receiving content of communication desired by a user,
based on evaluation of communication performed by the user in the past and/or evaluation of communication performed by other users similar to the user in the past with reference to the database unit, specifying a person who is highly evaluated by the user or the other users and specifying features of the specified person as a first feature that the partner of the communication should have, and
determining at least one partner based on the content of the communication desired by the user and the first feature.

### (Item 16)

A program for determining a partner of communication, the program being executed in a computer system including a processor unit and a database unit, the database unit storing results of communication performed by a plurality of users in the past and features of the plurality of users, and the program causing the processor unit to execute processing including
receiving content of communication desired by a user,
specifying a first feature that the partner of the communication should have based on results of communication performed by the user in the past and/or results of communication performed by other users similar to the user in the past with reference to the database unit, and
determining at least one partner based on the content of the communication desired by the user and the first feature,
in which the determining including
extracting a plurality of candidates for the partner based on the content of the communication desired by the user and the first feature,
for each candidate for the partner of the plurality of candidates for the partner, specifying a second feature that a partner should have in communication with the candidate for the partner based on results of communication performed by the candidate for the partner in the past with reference to the database unit, and
determining the at least one partner from the plurality of candidates for the partner based on whether or not the user has the second feature of each of the plurality of candidates for the partner.

### (Item 16A)

The program according to item 15 or 16, including features according to one or more items among the above-described items.

### (Item 16B)

A computer-readable storage medium that stores the program according to any one of items 15 to 16A.

### Advantageous Effects of Invention

According to the present invention, it is possible to determine a partner that a user should communicate with. The partner that the user should communicate with is, for example, a partner who is compatible with the user, a partner who can appropriately provide advice to a matter for consultation of the user, a partner who can respond well as desired by the user, or the like, but not limited to these. This enables the user to have highly satisfactory communication or consultation with the determined partner.

### Brief Description of Drawings

[Figure 1A] Figure 1A is a view illustrating an example of a screen to be displayed at a display unit of a terminal device to be used by a first user.
[Figure 1B] Figure 1B is a view illustrating an example of a screen to be displayed at a display unit of a terminal device to be used by a second user who is to be consulted.
[Figure 1C] Figure 1C is a view illustrating an example of a screen to be displayed at the display unit of the terminal device to be used by the first user.
[Figure 1D] Figure 1D is a view illustrating an example of a screen to be displayed at the display unit of the terminal device to be used by the first user.
[Figure 2] Figure 2 is a view illustrating an example of a configuration of a computer system 100 for determining a partner of communication.
[Figure 3] Figure 3 is a view illustrating an example of a data configuration of information on each user stored in a database unit 200.
[Figure 4] Figure 4 is a view illustrating an example of a configuration of a terminal device 300.
[Figure 5A] Figure 5A is a view illustrating an example of a configuration of a processor unit 120.
[Figure 5B] Figure 5B is a view illustrating an example of a configuration of a processor unit 120' that is an alternative embodiment of the processor unit 120.
[Figure 6A] Figure 6A is a view indicating a flowchart indicating an example of processing 600 by the computer system 100 for determining a partner of communication.
[Figure 6B] Figure 6B is a view indicating a flowchart of processing in step S603 in an embodiment in which a plurality of candidates for a partner are narrowed down to at least one partner.
[Figure 7] Figure 7 is a view indicating an example of data flow 700 among the computer system 100 for determining a partner of communication, the terminal device of the first user and the terminal device of the second user.

### Description of Embodiments

An embodiment of the present invention will be described below with reference to the drawings.

### 1. Application for determining person to consult

The inventors of the present invention have developed an application for determining a person to consult. Use of this application enables a user to recruit people who can respond to consultation content and determine a person to consult from at least one candidate for the person to consult who has applied for recruiting. The person to consult determined by this application can be, for example, a partner who is compatible with the user, a partner who can appropriately provide advice to a matter for consultation of the user, a partner who can respond well as desired by the user, or the like. This can make consultation with the determined partner highly satisfying for the user. The consultation includes, for example, having the person to consult listen to the user's story, receiving an opinion or advice from the person to consult, discussing with the person to consult, and the like.

The consultation with the determined partner may be performed, for example, on this application or using another method. The consultation may be performed, for example, only via speech or via video and speech (so-called video call or videophone call) or via text. Alternatively, the consultation may be performed via an avatar that moves in accordance with action of the user or the person to consult in place of video.

A case will be described below using an example where a first user consults with a person to consult on a trouble regarding work.

First, the first user registers for utilization of this application. To register for utilization, the first user inputs at least information regarding his/her job to the application. The information regarding the job can include, for example, an occupation, a career (experience or background on the occupation or skills), information on an enterprise at which the user works (such as a business type, a size, the number of employees and the number of years since establishment), but not limited to these. The first user can input personal information such as gender and age and login information such as username and a password in addition to this. The first user may further input a career image that the first user wants to be in the future (or content of a desired career) and/or skills that the first user wants to acquire in the future. The content of the desired career may be, for example, a job type or a job position that the user wants to be one year later, a job type or a job position that the user wants to be three years later, a job type or a job position that the user wants to be five years later, a job type or a job position that the user wants to be ten years later, a job type or a job position that the user wants to be twenty years later, or the like, or, for example, experience that the user wants to gain until one year later, experience that the user wants to gain until three years later, experience that the user wants to gain until five years later, experience that the user wants to gain until ten years later, experience that the user wants to gain until twenty years later, or the like, or an arbitrary combination of these.

In a similar manner, a second user who is to be consulted also registers for utilization of this application. The second user also inputs information similar to the information of the user to the application.

In this application, the user can be either a consulter (person who consults) or a person to be consulted (person who is to be consulted). The second user who is to be consulted by the user can also be either a consulter or a person to be consulted in a similar manner.

The first user can recruit people who can respond to content of consultation by inputting the content of consultation after registration for utilization.

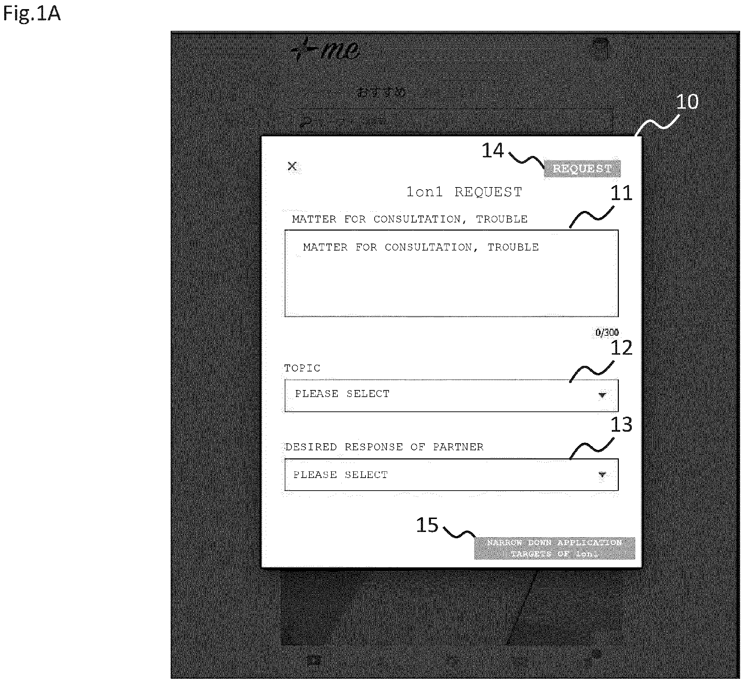

Figure 1A illustrates an example of a screen to be displayed at a display unit of a terminal device to be used by the first user. Figure 1A illustrates a consultation content input screen 10 for the first user to input content of consultation.

The consultation content input screen 10 is indicated as a popup screen on a home screen of the application. The consultation content input screen 10 includes a consultation matter input portion 11, a topic input portion 12 and a response input portion 13.

To the consultation matter input portion 11, a matter for consultation such as a matter as to which the user wants to consult or a concern can be input. The matter for consultation can be input to the consultation matter input portion 11, for example, through free description or by selecting the matter from a plurality of choices for the matter for consultation. Preferably, as illustrated in Figure 1A, the user can input the matter for consultation through free description.

To the topic input portion 12, a topic (or a theme) of the matter for consultation can be input. Note that in the present specification, the "topic" and the "theme" are synonymously used. To the topic input portion 12, for example, whether the matter for consultation is related to a career, is related to human relations, is related to how to proceed with work, is related to treatment, is related to love, or the like, can be input. The topic may be input to the topic input portion 12, for example, through free description or by selecting the topic from a plurality of choices for the topic. Preferably, as illustrated in Figure 1A, the user can input the topic by selecting the topic from a plurality of choices for the topic.

The present example is an example where the user consults with a person to consult as to a trouble regarding work, and thus, a topic regarding work (such as, for example, human relations in work, how to proceed with work and a career) can be input to the topic input portion 12. In a case where the user consults with a person to consult as to a trouble regarding another matter, the user can input a topic regarding the matter to the topic input portion 12.

To the response input portion 13, a response (or behavior and/or attitude) of a person to consult desired by the user in consultation with the person to consult can be input. The response desired by the user may be input to the response input portion 13 through free description or may be input by selecting the response from a plurality of chioces for the response. Preferably, as illustrated in Figure 1A, the user can input response desired by the user by selecting the response from a plurality of choices. The response desired by the user can include, for example, "giving a specific advice", "thinking together", "listening to the user's story", "giving an opinion", "discussing", and the like. The response desired by the user may be, for example, specific behavior or specific attitude.

If the first user performs input to at least one of the consultation matter input portion 11, the topic input portion 12 or the response input portion 13, preferably all of the consultation matter input portion 11, the topic input portion 12 and the response input portion 13 and selects a request button 14, the input content of consultation is posted. Then, people who can respond or who may be able to respond to the content of consultation are recruited.

Alternatively, if the first user selects a narrow down button 15, conditions for narrowing down people to consult can be input. For example, as the conditions for narrowing down people to consult, age of the person to consult, a business type of the person to consult, a job type of the person to consult, a size of enterprise of the person to consult, and the like, can be input. In addition to these or in place of these, an exception keyword can be also input. By inputting an exception keyword, a user who works at the enterprise including the keyword in enterprise name is not determined as the person to consult. This is useful in a case where it is desired to exclude people in a specific company such as a company of the user or its group businesses, and the like, from the person to consult. If the first user performs input to at least one of the consultation matter input portion 11, the topic input portion 12 or the response input portion 13, preferably all of the consultation matter input portion 11, the topic input portion 12 and the response input portion 13 and selects the request button 14 after inputting the conditions for narrowing down people to consult, the input content of consultation is posted. Then, people who can respond or who may be able to respond to the content of consultation are recruited.

Through this application, people who can respond or who may be able to respond to the content of consultation can be determined based on the posted content of consultation. Then, content of recruitment, that is, a consultation request can be presented to the determined people.

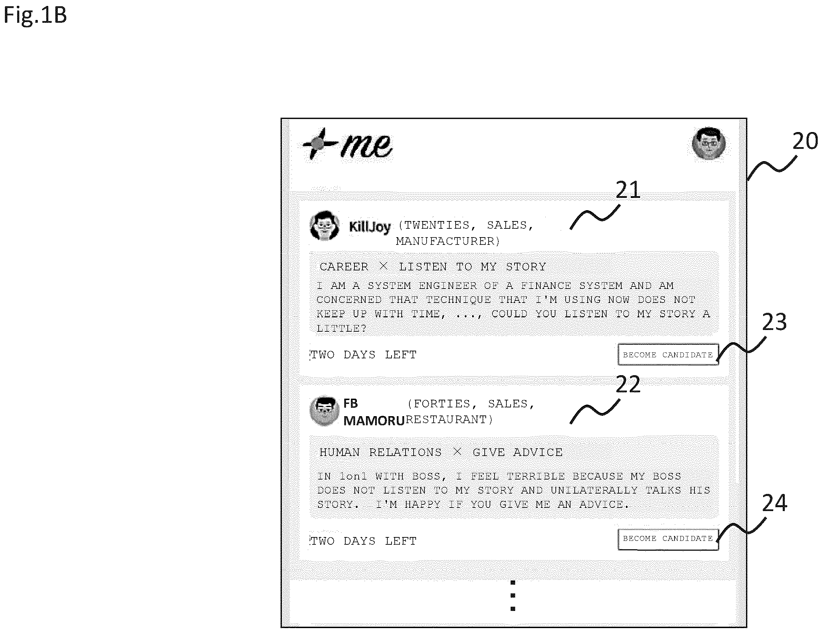

Figure 1B illustrates an example of a screen to be displayed at a display unit of the terminal device to be used by the second user who is to be consulted. Figure 1B illustrates a recruitment content display screen 20 that displays content of recruitment (or a consultation request) presented to the second user.

The recruitment content display screen 20 includes recruitment content display portions 21, 22. In the example illustrated in Figure 1B, two recruitment content display portions 21, 22 corresponding to two recruitments are indicated. The recruitment content display portions respectively include "become candidate" buttons 23, 24, and the user can apply for the recruitment or approve the consultation request by selecting the "become candidate" buttons 23, 24.

For example, in the recruitment content display portions 21, 22, the matter for consultation, the topic and the desired response are displayed in accordance with the content of consultation input by the first user or other users who recruit people to consult. In addition, username and attributes (for example, generation, job types, business types) of the people who recruit persons to consult can be displayed. Here, the users are preferably displayed with username instead of real name, that is, anonymously. Further, the attributes are preferably simple enough to make it impossible to identify specific enterprises and/or business titles. This enables the second user to determine whether or not provide consultation to the users without having a prejudice by the attributes (for example, the business titles) of the users.

In the example illustrated in Figure 1B, the first user is displayed with username of "KillJoy", and that the first user is in twenties, has a job type of sales, and works at a company whose business type is a manufacturer is displayed.

In the consultation content input screen 10 in Figure 1A, the first user inputs a matter for consultation, inputs a "career" as a topic, inputs "listening to the user's story" as desired response and makes a post, and thus, the content of consultation is displayed in the recruitment content display portion 21.

The recruitment content display screen 20 as illustrated in Figure 1B can be presented to a plurality of users determined as people who can respond or who may be able to respond to the content of consultation by the application. By this means, a plurality of users can apply for one recruitment. The plurality of users who has applied for the recruitment are presented to the user (for example, the first user) who recruits a person to consult as candidates for the person to consult.

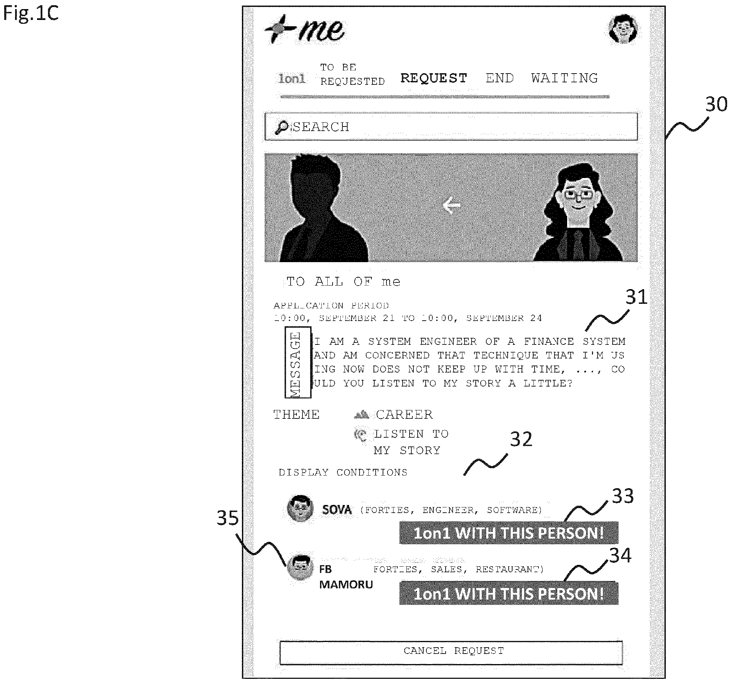

Figure 1C illustrates an example of a screen to be displayed at a display unit of the terminal device to be used by the first user. Figure 1C illustrates a candidate display screen 30 that displays candidates for the person to consult who have applied with respect to the content of consultation posted by the first user.

The candidate display screen 30 includes a consultation content display portion 31 and a consultation partner candidate display portion 32.

In the consultation content display portion 31, the content of consultation posted by the first user is displayed. In the consultation content input screen 10 in Figure 1A, the first user inputs the matter for consultation, inputs the "career" as the topic, inputs "listening to the user's story" as the desired response and makes a post, and thus, the content of consultation is displayed in the consultation content display portion 31.

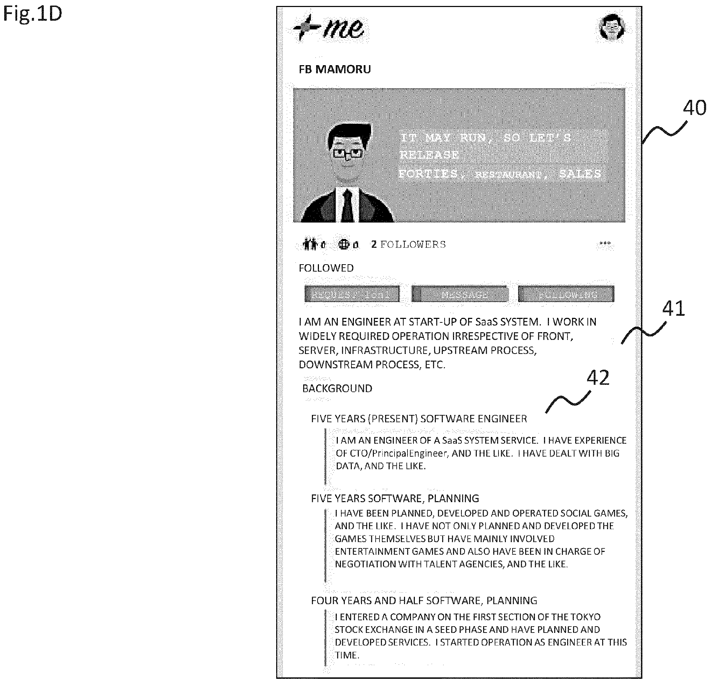

In the consultation partner candidate display portion 32, candidates for the person to consult who have applied with respect to the content of consultation displayed in the consultation content display portion 31 are displayed. In the consultation partner candidate display portion 32, username and attributes (for example, generation, job types, business types) of the candidates for the person to consult who have applied can be also displayed. Here, the users are preferably displayed with username instead of real name, that is, anonymously. Further, the attributes are preferably simple enough to make it impossible to identify specific enterprises and/or business titles. This enables the first user to determine the person to consult without having a prejudice by the attributes (for example, business titles) of the candidates for the person to consult. Here, two users (a user whose username is "SOVA" and a user whose username is "FB Mamoru") are displayed as the candidates for the person to consult. For example, if the user selects an icon of the candidate for the person to consult, the user can browse a profile of the candidate for the person to consult. For example, if the user selects an icon 35, the screen transitions to a screen illustrated in Figure 1D, and the user can browse a profile of the user whose username is "FB Mamoru".

For the respective candidates for the person to consult displayed in the consultation partner candidate display portion 32, "1on1 with this person!" buttons 33, 34 are displayed, and the person to consult is determined by this button being selected, and "1on1" with the person to consult is executed. In "1on1", the first user can consult the person to consult.

"1on1" may be performed on a dedicated screen that comes up on this application or may be performed on another application that coordinates with the application. "1on1" may be performed, for example, only via speech or via video and speech (so-called video call or videophone call) or via text. Alternatively, "1on1" may be performed via an avatar that moves in accordance with action of the user or the person to consult in place of video.

Note that while a case has been described in the above-described example where the first user consults the person to consult in "1on1" that is one-on-one communication, the first user may consult people to consult in one-to-many communication. In this case, the first user selects people to consult.

Figure 1D illustrates an example of a screen to be displayed at the display unit of the terminal device to be used by the first user. Figure 1D illustrates a profile display screen 40 that displays a profile of a candidate for the person to consult.

The profile display screen 40 includes a self-introduction display portion 41 and a background display portion 42.

In the self-introduction display portion 41, self-introduction sentences of the candidate for the person to consult are displayed. The self-introduction sentences may be set, for example, upon registration for utilization or may be set or changed after registration for utilization.

In the background display portion 42, a background of the candidate for the person to consult is displayed. The background may be based on, for example, information input upon registration for utilization or may be based on information input or changed after registration for utilization.

In the example illustrated in Figure 1D, in the profile display screen 40, the profile of the user whose username is "FB Mamoru" including the generation, the business type, the job type, the self-introduction sentences and the background is displayed.

The user can determine whether or not to consult the user with reference to the profile of the candidate for the person to consult.

While in the above-described example, a case has been described using an example where the user determines a partner for consultation (person to consult or a person to be consulted), the purpose is not limited to consultation. This application can be utilized to search for a partner of arbitrary communication. The communication may include, for example, communication for learning something from the partner (for example, including but not limited to communication for learning from the partner how to effectively extract capability of a subordinate, communication for learning from the partner how to smoothly proceed with a meeting or how to form a future career, communication for learning from the partner how to effectively study for examination, communication for learning from the partner knowledge or skills for upskilling or as an enrichment lesson, and the like).

The above-described application for determining the person to consult may be implemented, for example, by a computer system for determining a partner of communication which will be described later. By the computer system for determining the partner of communication, the user can determine a partner that the user should communicate with, for example, an optimal communication partner for supporting individuals with each other. The partner that the user should communicate with, determined by the computer system is, for example, a partner who is compatible with the user, a partner who can appropriately provide advice to a matter for consultation of the user, a partner who can respond well as desired by the user, or the like, and the user can perform highly satisfactory communication with the determined partner.

### 2. Computer system for determining partner of communication

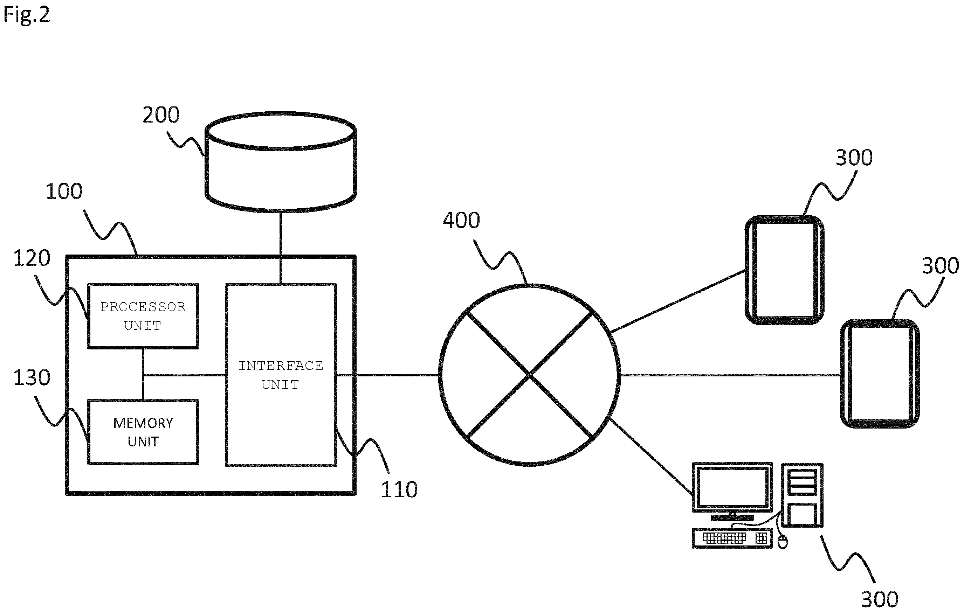

Figure 2 illustrates an example of a configuration of a computer system 100 for determining a partner of communication.

The computer system 100 is connected to a database unit 200. Further, the computer system 100 is connected to at least one terminal device 300 via a network 400.

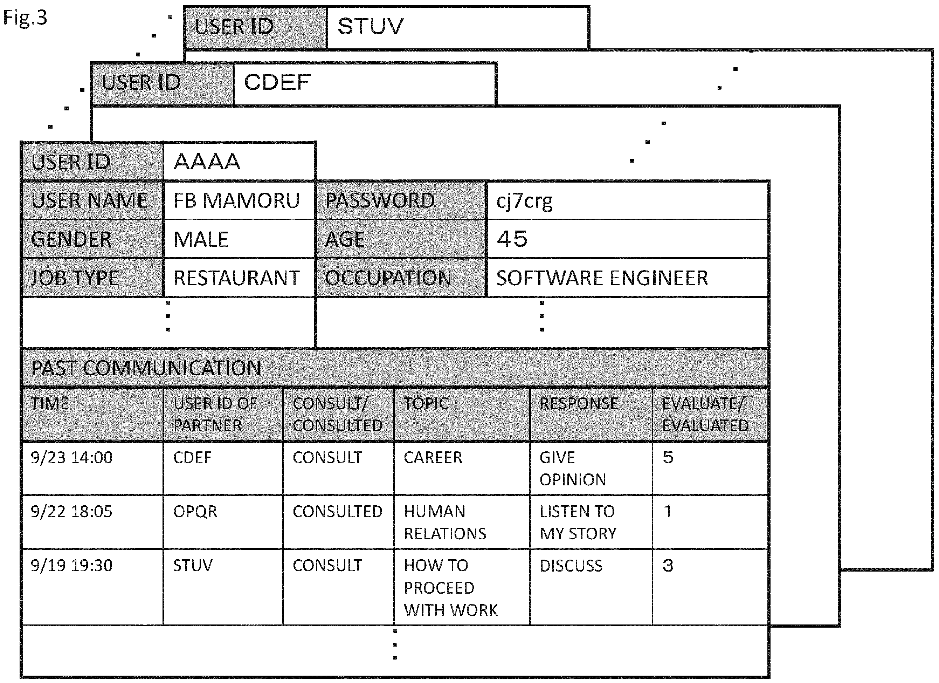

Note that while Figure 3 illustrates three terminal devices 300, the number of the terminal devices 300 is not limited to this. An arbitrary number of terminal devices 300 can be connected to the system 100 via the network 400.

The network 400 can be an arbitrary type of network. The network 400 may be, for example, the Internet or a LAN. The network 400 may be a wired network or a wireless network.

The computer system 100 can be, for example, a computer (for example, a server device) provided in a service provider that provides an application for determining a person to consult or an application that determines a person to consult and enables consultation with the determined partner. The terminal device 300 can be a computer (for example, a terminal device) to be utilized by the user and a partner of communication with the user. For example, in the above-described example, one of the terminal devices 300 can be a computer to be utilized by the user who is a consulter (for example, the first user in the above-described example), and another one of the terminal devices 300 can be a computer to be utilized by one of candidates for a person to consult (for example, the second user in the above-described example). Here, the computer (the server device or the terminal device) can be an arbitrary type of computer. For example, the terminal device can be an arbitrary type of terminal device such as a smartphone, a tablet, a personal computer, a smart glass and a smart watch.

The computer system 100 includes an interface unit 110, a processor unit 120 and a memory unit 130. The computer system 100 is connected to the database unit 200.

The interface unit 110 exchanges information with outside of the computer system 100. The processor unit 120 of the computer system 100 can receive information from outside of the computer system 100 via the interface unit 110 and can transmit information to outside of the computer system 100. The interface unit 110 can exchange information in an arbitrary format. The terminal device 300 to be used by the user and the terminal device 300 to be used by a partner of communication with the user can communicate with the computer system 100 via the interface unit 110.

The interface unit 110 includes, for example, an input unit that enables input of information to the computer system 100. The input unit can take any aspect that enables input of information to the computer system 100. For example, in a case where the input unit is a receiver, information may be input by the receiver receiving the information from outside of the computer system 100 via a network. In this case, any type of network can be used. For example, the receiver may receive information via the Internet or may receive information via a LAN.

The interface unit 110 can, for example, receive content of communication desired by the user. For example, if the user inputs content of desired communication to the terminal device 300 of the user, the interface unit 110 can receive the content from the terminal device 300 of the user. The content of the desired communication may include, for example, a topic that the user wants to talk about in communication, and/or response of the partner desired by the user in communication. The content of the desired communication may include, for example, a matter for consultation or a concern. More specifically, the content of the desired communication can include, for example, a matter for consultation in work or a concern in work.

The interface unit 110 can, for example, receive content of a career desired by the user. For example, if the user inputs the desired career content to the terminal device 300 of the user, the interface unit 110 can receive the content from the terminal device 300 of the user. The desired career content may be, for example, a job type or a job position that the user wants to be one year later, a job type or a job position that the user wants to be three years later, a job type or a job position that the user wants to be five years later, a job type or a job position that the user wants to be ten years later, a job type or a job position that the user wants to be twenty years later, or the like, or, for example, experience that the user wants to gain until one year later, experience that the user wants to gain until three years later, experience that the user wants to gain until five years later, experience that the user wants to gain until ten years later, experience that the user wants to gain until twenty years later, or the like, or an arbitrary combination of these.

The interface unit 110 can, for example, receive approval of a request for communication with the first user. The approval of the request can be a response to the request for communication with the first user, the request being transmitted to at least one candidate for a person to consult (for example, the second user) determined as a partner of communication with the first user. The at least one candidate for the person to consult can, for example, transmit approval of the request from the terminal device 300 of the at least one candidate for the person to consult.

The interface unit 110 includes, for example, an output unit that enables output of information from the computer system 100. The output unit may take any aspect that enables output of information from the computer system 100. For example, in a case where the output unit is a transmitter, information may be output by the transmitter transmitting the information to outside of the computer system 100 via a network. In this case, any type of network can be used. For example, the transmitter may transmit information via the Internet or may transmit information via a LAN.

The interface unit 110 can, for example, transmit a request for communication with the first user to at least one candidate for the person to consult (for example, the second user) determined as the partner of communication with the first user. The at least one candidate for the person to consult can, for example, receive the request at the terminal device 300 of the at least one candidate for the person to consult.

The interface unit 110 can, for example, transmit a list of the at least one candidate for the person to consult to the first user to present the at least one candidate for the person to consult (for example, the second user) who has approved the above-described request to the first user. The first user can, for example, receive the list at the terminal device 300 of the first user.

The processor unit 120 executes processing of the computer system 100 and controls operation of the whole computer system 100. The processor unit 120 reads out a program stored in the memory unit 130 and executes the program. This enables the computer system 100 to function as a system that executes a desired step. The processor unit 120 may be implemented with a single processor or may be implemented with a plurality of processors.

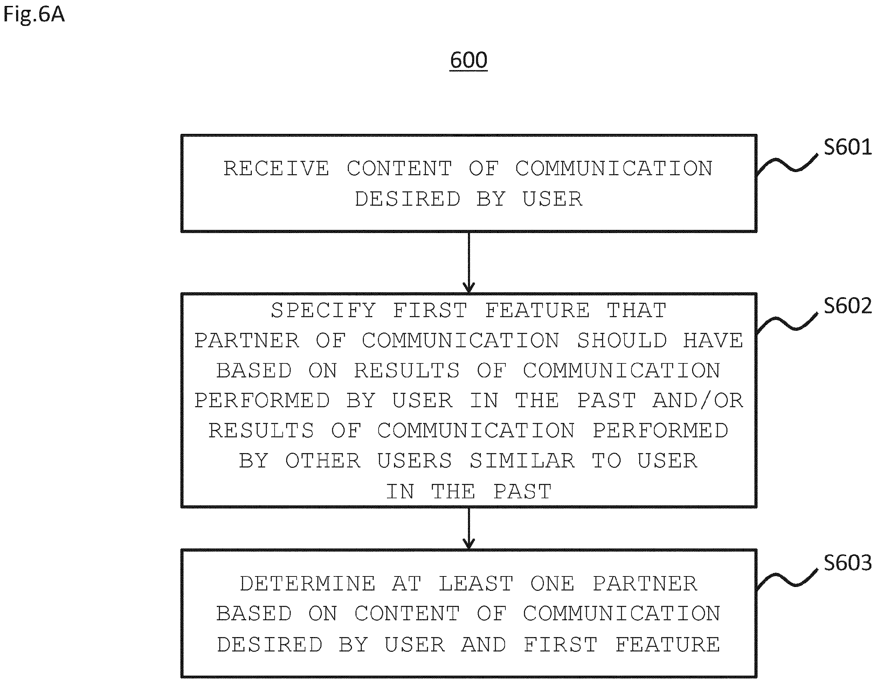

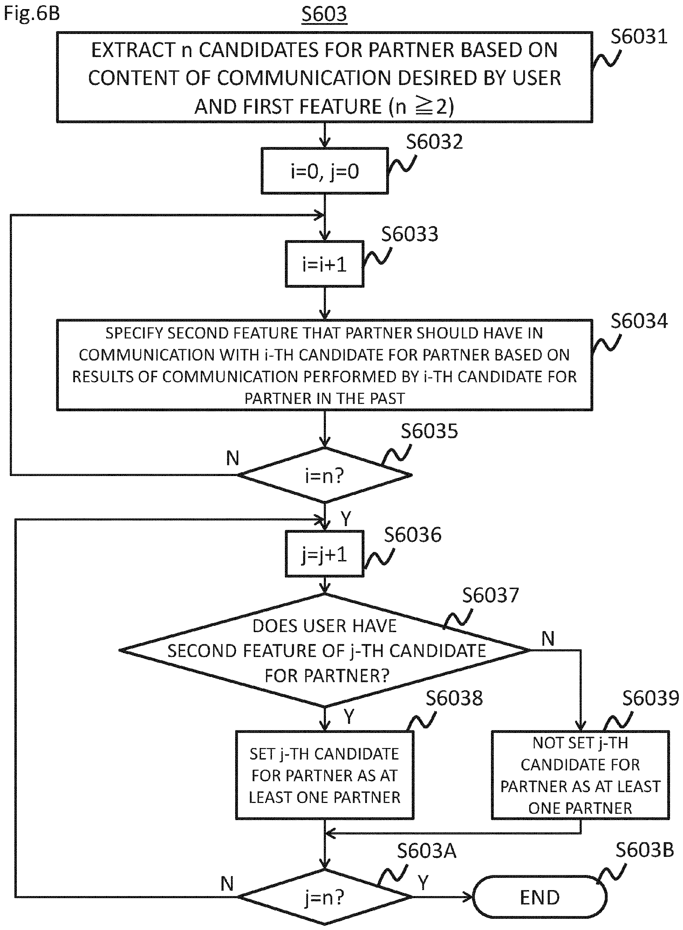

The memory unit 130 stores programs necessary for executing the processing of the computer system 100 and data, and the like, necessary for execution of the programs. The memory unit 130 may store a program (for example, a program that implements processing indicated in Figure 6A and Figure 6B which will be described later) for causing the processor unit 120 to perform processing for determining a partner of communication. Here, the programs may be stored in the memory unit 130 using any method. For example, the programs may be pre-installed in the memory unit 130. Alternatively, the programs may be installed in the memory unit 130 by being downloaded by way of a network. In this case, any type of network can be used. The memory unit 130 can be implemented with arbitrary storage means. Alternatively, the programs may be stored in a computer-readable storage medium and installed in the memory unit 130 by being read from the computer-readable storage medium.

In the database unit 200, various kinds of information to be utilized in processing for determining a partner of communication are stored.

In the database unit 200, information input by the user when the user utilizes the application can be stored. In the database unit 200, for example, information regarding a job of the user, personal information of the user, login information (such as user name and a password), and the like, can be stored for each user. Further, results of communication performed by the user in the past can be also stored in association with the information on each user. The results of communication performed by the user in the past can include identifiers of partners of the communication and evaluation of the communication. The evaluation of the communication is evaluation input after the communication with the partners. The evaluation of the communication may be, for example, two-stage evaluation indicating whether or not the user satisfies the communication with the partner or may be multiple-stage evaluation indicating a degree of satisfaction with the communication with the partner. The results of the communication performed by the user in the past can also include topics and desired response input by the consulter in the communication.

Figure 3 illustrates an example of a data configuration of information on each user stored in the database unit 200.

In the database unit 200, information on each user is stored in association with a user ID for each user. The user information includes information regarding a job of the user such as an occupation and a job type in addition to the personal information of the user such as user name, a password, gender and age. Further, results of communication performed in the past are also stored in association with the ID of each user. The results of communication performed in the past include time at which the communication was performed, user IDs of partners of the communication, identifiers indicating whether the communication was performed to consult with the partners or performed to be consulted by the partners (consulting or consulted), topics and desired response input by the consulter, evaluation on the partners in a case where the communication was performed to consult with the partners or evaluation from the partners in a case where the communication was performed to be consulted by the partners.

In the example illustrated in Figure 3, in the database unit 200, personal information of the user, information regarding the job of the user, results of communication performed by the user in the past are stored in association with a user ID "AAAA", and information is similarly stored also for a user ID "CDEF" and a user ID "STUV". It can be seen from the information stored in the database unit 200 that the user "AAAA" has consulted the user "CDEF" while desiring response of "giving an opinion" regarding a "career" at 14:00 on September 23 and has evaluated the communication at that time as 5 among five stages, the user "AAAA" has been consulted by a user "OPQR" while response of "listening to the user's story" regarding "human relations" is desired at 18:05 on September 22, and the communication at that time has been evaluated by the user "OPQR" as 1 among five stages, and the user "AAAA" has consulted the user "STUV" while desiring response of "discussing" regarding "how to proceed with work" at 19:30 on September 19 and has evaluated the communication at that time as 3 among five stages, and the like. On a reverse side of this, it can be also seen that the user "CDEF" has been consulted by the user "AAAA" while response of "giving an opinion" regarding a "career" is desired at 14:00 on September 23, and the communication at that time has been evaluated by the user "AAAA" as 5 among five stages, the user "OPQR" has consulted the user "AAAA" while desiring response of "listening to the user's story" regarding "human relations" at 18:05 on September 22 and has evaluated the communication at that time as 1 among five stages, and the user "STUV" has been consulted by the user "AAAA" while response of "discussing" regarding "how to proceed with work" is desired at 19:30 on September 19, the communication at that time has been evaluated by the user "AAAA" as 3 among five stages, and the like, and these are also stored in association with the user ID "CDEF", the user ID "OPQR" and the user ID "STUV" in a similar manner.

With reference to such a database unit 200, it is possible to specify a user who is highly valued by a specific user (such as, for example, a user for whom a satisfaction level is evaluated as high and a user for whom an evaluation score is evaluated as higher than an average value) and specify features (such as, for example, features regarding gender, age and a job) of the user. Preferably, it is possible to specify a user who is highly valued by a specific user (such as, for example, a user for whom a satisfaction level is evaluated as high and a user for whom an evaluation score is evaluated as higher than an average value) regarding communication with the specific user under a specific topic and/or desired response and specify features (such as, for example, features regarding gender, age and a job) of the user.

In a similar manner, with reference to such a database unit 200, it is possible to specify a user who is evaluated as low by a specific user (such as, for example, a user for whom a satisfaction level is evaluated as low and a user for whom an evaluation score is evaluated as lower than an average value) and specify features (such as, for example, features regarding gender, age and a job) of the user. Preferably, it is possible to specify a user who is evaluated as low by a specific user (such as, for example, a user for whom a satisfaction level is evaluated as low and a user for whom an evaluation score is evaluated as lower than an average value) regarding communication with the specific user under a specific topic and/or desired response with the specific user and specify features (such as, for example, features regarding gender, age and a job) of the user.

Further, with reference to such a database unit 200, it is possible to specify a user who has highly valud a specific user (such as, for example, a user who has evaluated a satisfaction level of the specific user as high and a user who has evaluated an evaluation score of the specific user as higher than an average value) and specify features (such as, for example, features regarding gender, age and a job) of the user. Preferably, it is possible to specify a user who has highly valued a specific user (such as, for example, a user who has evaluated a satisfaction level of the specific user as high and a user who has evaluated an evaluation score of the specific user as higher than an average value) regarding communication with the specific user under a specific topic and/or desired response with the specific user and specify features (such as, for example, features regarding gender, age and a job) of the user.

In a similar manner, with reference to such a database unit 200, it is possible to specify a user who has evaluated a specific user as low (such as, for example, a user who has evaluated a satisfaction level of the specific user as low and a user who has evaluated an evaluation score of the specific user as lower than an average value) and specify features (such as, for example, features regarding gender, age and a job) of the user. Preferably, it is possible to specify a user who has evaluated a specific user as low (such as, for example, a user who has evaluated a satisfaction level of the specific user as low and a user who has evaluated an evaluation score of the specific user as lower than an average value) regarding communication with the specific user under a specific topic and/or desired response with the specific user and specify features (such as, for example, features regarding gender, age and a job) of the user.

Further, with reference to such a database unit 200, it is possible to specify other users similar to the specific user. Here, the other users similar to the specific user refer to other users having the same features as at least part of the features of the specific user. Preferably, the other users similar to the specific user can be users who have or have had the same job type as the job type of the specific user. More preferably, the users similar to the specific user can be users who have or have had the same job type as the job type of the specific user and who belong or have belonged to enterprises of the same size of the number of employees as the enterprise to which the specific user belongs. More preferably, users similar to the specific user can be users who are in the same generation (±5 years from the age of the specific user) as the generation of the specific user, who have the same job type and/or who belong to enterprises of the same size of the number of employees as the enterprise to which the specific user belongs or users who have had the same job type and/or who have belonged to enterprises of the same size of the number of employees when the users are in the same generation as the generation of the specific user. The users similar to the specific user may be, for example, users having the same career as a career desired by the specific user (for example, a job type or a state that the user wants to be in the future). The users similar to the specific user may be, for example, users having the same capability as capability that the specific user wants to gain.

While in the example illustrated in Figure 2, the database unit 200 is provided outside the computer system 100, the present invention is not limited to this. The database unit 200 can be provided inside the computer system 100. In this event, the database unit 200 may be implemented with the same storage means as the storage means that implement the memory unit 130 or may be implemented with storage means different from the storage means that implement the memory unit 130. In any case, the database unit 200 is configured as a storage unit for the computer system 100. The configuration of the database unit 200 is not limited to a specific hardware configuration. For example, the database unit 200 may be constituted with a single hardware component or may be constituted with a plurality of hardware components. For example, the database unit 200 may be configured as an external hard disk device of the computer system 100 or may be configured as a storage on cloud connected via a network.

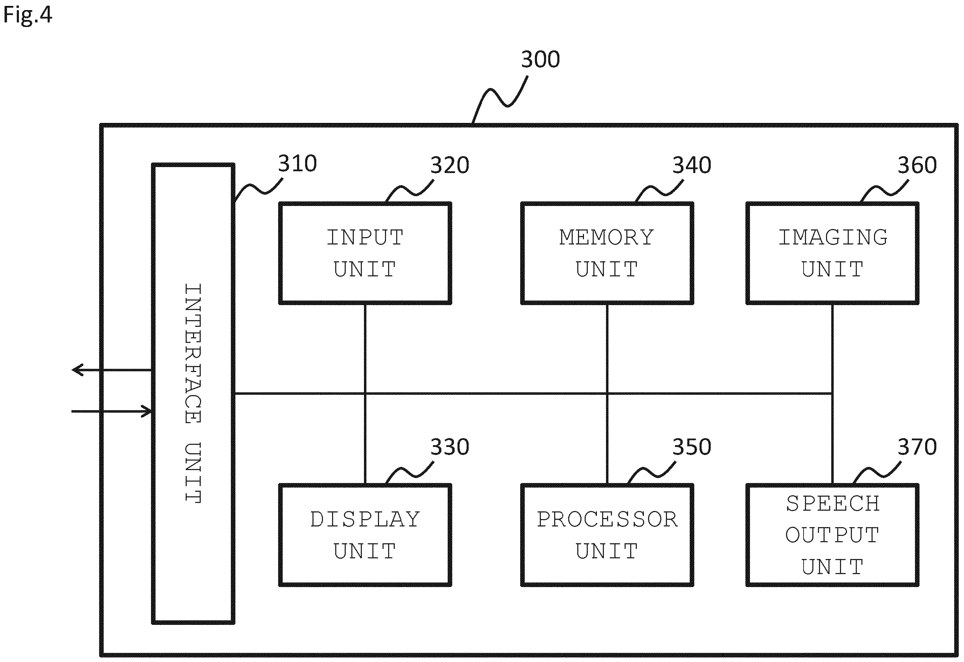

Figure 4 illustrates an example of a configuration of the terminal device 300.

The terminal device 300 includes an interface unit 310, an input unit 320, a display unit 330, a memory unit 340, a processor unit 350, an imaging unit 360, and a speech output unit 370.

The interface unit 310 controls communication via the network 400. The processor unit 350 of the terminal device 300 can receive information from outside of the terminal device 300 and can transmit information to outside of the terminal device 300 via the interface unit 310. The interface unit 310 can control communication using an arbitrary method.

The input unit 320 enables the user to input information to the terminal device 300. The input unit 320 may take any aspect that enables the user to input information to the terminal device 300. For example, in a case where the input unit 320 is a touch panel, the user may input information by touching the touch panel. Alternatively, in a case where the input unit 320 is a mouse, the user may input information by operating the mouse. Alternatively, in a case where the input unit 320 is a keyboard, the user may input information by depressing keys of the keyboard. Alternatively, in a case where the input unit is a microphone, the user may input information by inputting speech to the microphone. Alternatively, in a case where the input unit is a data reading device, information may be input by the information being read from a storage medium connected to the computer system 100.

The display unit 330 can be an arbitrary display for displaying information. For example, at the display unit 330, the screen illustrated in Figure 1A, Figure 1C or Figure 1D or the screen illustrated in Figure 1B is displayed.

In the memory unit 340, programs for executing processing at the terminal device 300 and data, and the like, necessary for execution of the programs are stored. In the memory unit 340, for example, an application for processing for determining a partner of communication is stored. In the memory unit 340, an application implementing an arbitrary function may be stored. Here, the program may be stored in the memory unit 340 using any method. For example, the program may be pre-installed in the memory unit 340. Alternatively, the program may be installed in the memory unit 340 by being downloaded by way of the network 400. The memory unit 340 can be implemented with arbitrary storage means.

The processor unit 350 controls operation of the whole terminal device 300. The processor unit 350 reads out a program stored in the memory unit 340 and executes the program. This enables the terminal device 300 to function as a device that executes a desired step. The processor unit 350 may be implemented with a single processor or may be implemented with a plurality of processors.

The imaging unit 360 is arbitrary means capable of capturing a still image or a moving image. The imaging unit 360 is, for example, a camera. The camera may be a built-in camera of the terminal device 300 or may be an external camera to be attached to the terminal device 300.

The speech output unit 370 is arbitrary means for outputting speech. The speech output unit 370 is, for example, a speaker.

While in the example illustrated in Figure 4, the respective components of the terminal device 300 are provided inside the terminal device 300, the present invention is not limited to this. One of the respective components of the terminal device 300 can be provided outside the terminal device 300. For example, in a case where the input unit 320, the display unit 330, the memory unit 340, the processor unit 350, the imaging unit 360 and the speech output unit 370 are respectively constituted with different hardware components, the respective hardware components may be connected via an arbitrary network. In this event, any type of network can be used. The respective hardware components may be, for example, connected via a LAN or connected in a wireless manner or in a wired manner. The terminal device 300 is not limited to a specific hardware configuration. For example, constituting the processor unit 350 with an analog circuit instead of a digital circuit is also within the scope of the present invention. The configuration of the terminal device 300 is not limited to the above as long as the functions can be implemented.

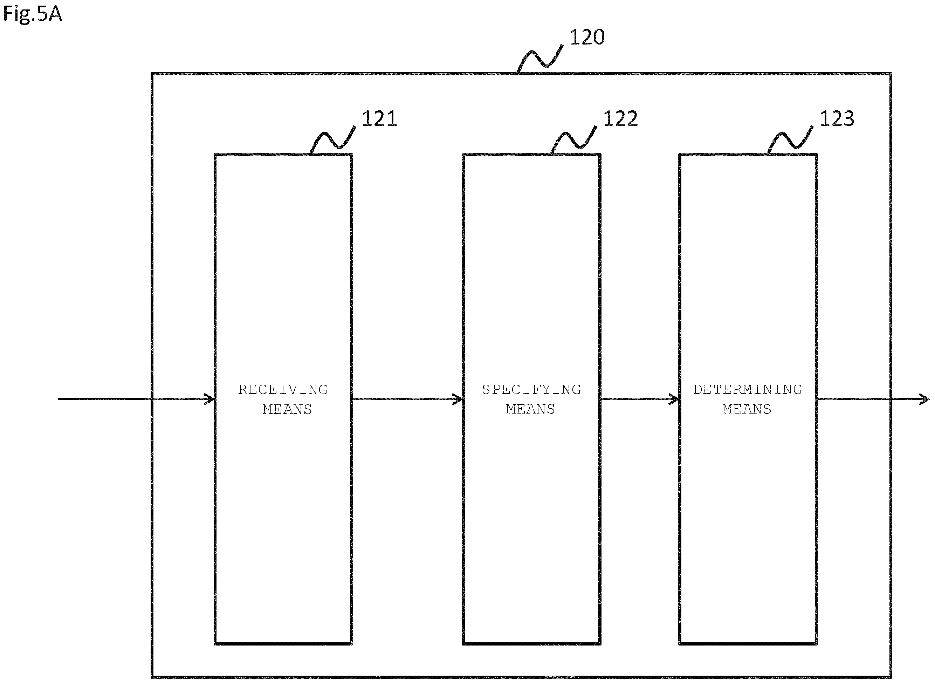

Figure 5A illustrates an example of a configuration of the processor unit 120.

The processor unit 120 includes a receiving means 121, a specifying means 122 and a determining means 123.

The receiving means 121 is configured to receive content of communication desired by the user. The receiving means 121 can, for example, receive content of communication desired by the user, acquired from outside of the computer system 100 via the interface unit 110. The content of the communication desired by the user can be, for example, content of consultation input by the user on the consultation content input screen 10 illustrated in Figure 1A. The content of the communication desired by the user includes a topic that the user wants to talk about in the communication and/or response of the partner desired by the user in the communication.

For example, in a case where the purpose of the communication is consultation as to a concern regarding work, the topic that the user wants to talk about in the communication can be a topic regarding work (such as, for example, human relations on work, how to proceed with work and a career).

The response of the partner desired by the user in the communication may be, for example, specific behavior or specific attitude. In one example, the desired response can be, for example, "giving a specific advice", "thinking together", "listening to the user's story", "giving an opinion", "discussing", and the like.

The content of the communication desired by the user, received at the receiving means 121 is passed to the specifying means 122.

The receiving means 121 can further receive content of the career desired by the user. The receiving means 121 can, for example, receive the content of the career desired by the user, acquired from outside of the computer system 100 via the interface unit 110. The content of the career desired by the user can be, for example, as described above, content input by the user when the user performs registration for utilization for utilizing the application for determining a person to consult. The content of the desired career may be, for example, a job type or a job position that the user wants to be one year later, a job type or a job position that the user wants to be three years later, a job type or a job position that the user wants to be five years later, a job type or a job position that the user wants to be ten years later, a job type or a job position that the user wants to be twenty years later, or the like, or, for example, experience that the user wants to gain until one year later, experience that the user wants to gain until three years later, experience that the user wants to gain until five years later, experience that the user wants to gain until ten years later, experience that the user wants to gain until twenty years later, or the like, or an arbitrary combination of these.

The content of the career desired by the user, received by the receiving means 121 is passed to the determining means 123.

The specifying means 122 is configured to specify a first feature that the partner of the communication should have based on results of communication performed by the user in the past and/or results of communication performed by other users similar to the user in the past.

For example, in a case where the results of communication performed by the user in the past are not stored in the database unit 200 (for example, in a case where the user utilizes the application for determining a person to consult for the first time), the specifying means 122 can determine that results of communication performed by the user in the past are not stored in the database unit 200 and can specify the first feature that the partner of the communication should have based on the results of communication performed by other users similar to the user in the past. By this means, even in a case where the user utilizes the application for determining a person to consult for the first time, the specifying means 122 can specify an appropriate partner.

The specifying means 122 can, for example, specify other users similar to the user by referring to the database unit 200 that stores features of each user. The specifying means 122 can, for example, search the database unit 200 for users having the same features as at least part of the features (for example, features regarding age, gender and a job) of the user.

For example, in a case where the results of communication performed by the user in the past are stored in the database unit 200 (for example, in a case where the user has utilized the application for determining a person to consult), the specifying means 122 can determine that the results of communication performed by the user in the past are stored in the database unit 200 and can specify the first feature that the partner of the communication should have based on the results of communication performed by the user in the past and/or the results of communication performed by other users similar to the user in the past. For example, in a case where a sufficient amount of results of communication performed by the user in the past are not stored in the database unit 200, the specifying means 122 can specify the first feature that the partner of the communication should have based on the results of communication performed by other users similar to the user in the past or based on the results of communication performed by the user in the past and the results of communication performed by other users similar to the user in the past. By this means, even in a case where the user does not utilize the application for determining a person to consult many times, the specifying means 122 can specify an appropriate partner. For example, in a case where a sufficient amount of the results of communication performed by the user in the past are stored in the database unit 200, the specifying means 122 can specify the first feature that the partner of the communication should have based on the results of communication performed by the user in the past.

The specifying means 122 can, for example, specify other users who have been highly valued by the user (such as, for example, other users for whom the user has evaluated satisfaction levels as high and other users for whom the user has evaluated evaluation scores as higher than an average value) by referring to the database unit 200 that stores the results of communication performed by the user in the past and/or the results of communication performed by other users similar to the user in the past and specify features of the other users. The features can be considered as features of a partner who is expected to be highly valued by the user, and thus, can be regarded as the first feature that the partner of the communication with the user should have.

The first feature includes, for example, features regarding gender, age and/or a job, but not limited to these. Preferably, the first feature includes features regarding a job. Information regarding the job includes, for example, an occupation, a career, information on an enterprise at which the person works, and the like, but not limited to these. Preferably, the information regarding the job includes a career. As a result of the information regarding the job including a career, it becomes possible to determine at least one partner based on content of the career desired by the user as will be described later.

For example, in a case where a plurality of other users who are highly valued by the user are specified by the specifying means 122, respective features of the plurality of users may be set as the first feature, or features common to part or all of the plurality of users may be set as the first feature.

For example, in a case where a user A who is highly valued by the user has features of a male, thirties, a sales position, and a restaurant business, and a user B who is highly valued by the user has features of a male, fifties, a sales position, and a manufacturing business, the specifying means 122 may, for example, set a male, thirties or fifties, a sales position and a restaurant business or a manufacturing business as the first feature or may set a male and a sales position as the first feature.

The determining means 123 is configured to determine at least one partner based on the content of the communication desired by the user and the first feature. The determining means 123 can, for example, determine a person who has the first feature and who can deal with the content of the communication desired by the user as the at least one partner. The person who can deal with the content of the communication desired by the user may be, for example, a person who has experience of communication under the same topic as the topic that the user wants to talk about, a person who has experience of communication requested to respond in the same way as the response desired by the user, or a person who has experience of communication under the same topic as the topic that the user wants to talk about and requested to respond in the same way as the response desired by the user. Preferably, the person who can deal with the content of the communication desired by the user may be a person who has been highly valued in communication under the same topic as the topic that the user wants to talk about, a person who has been highly valued in communication requested to respond in the same way as the response desired by the user or a person who has been highly valued in communication under the same topic as the topic that the user wants to talk about and requested to respond in the same way as the response desired by the user.

The determining means 123 can specify the person who can deal with the content of the communication desired by the user by referring to the database unit 200 that stores results of communication in the past.

The determining means 123 can, for example, determine the at least one partner by extracting people having the first feature with reference to the database unit 200 and narrowing down the extracted people to people who can deal with the content of the communication desired by the user. Alternatively, the determining means 123 can, for example, determine the at least one partner by extracting people who can deal with the content of the communication desired by the user with reference to the database unit 200 and narrowing down the extracted people to people having the first feature. Alternatively, the determining means 123 can, for example, extract people who can deal with the content of the communication desired by the user and who have the first feature with reference to the database unit 200 and determine the extracted people as the at least one partner.

The at least one partner determined in this manner is a person who is expected to be highly valued by the user, and it is expected that the user can have highly satisfactory communication by performing communication with the partner.

In one embodiment, the determining means 123 can determine the at least one partner further based on content of the career desired by the user in addition to the content of the communication desired by the user and the first feature. The determining means 123 can, for example, determine a person having a career that matches at least part of the content of the career desired by the user as the at least one partner. Preferably, the determining means 123 can determine a person having a career that matches all of the content of the career desired by the user as the at least one partner. This enables the user to communicate with a partner who has achieved a career image that the user wants to be in the future. The user can get to hear about an idea of the partner who has achieved the career image that the user wants to be in the future and make use of this in forming the career of the user.

In a case where a plurality of partners are determined by the determining means 123, the plurality of partners may be set as partners of communication of the user, or the plurality of partners are set as candidates for the partner, and the plurality of choices for the partner may be narrowed down to at least one partner.

In an embodiment in which the plurality of choices for the partner are narrowed down to at least one partner, the determining means 123 first extracts a plurality of choices for the partner based on the content of the communication desired by the user and the first feature as described above. Then, for each candidate for the partner of the plurality of choices for the partner, the determining means 123 determines a second feature that the partner should have in communication with the candidate for the partner based on results of communication performed by the candidate for the partner in the past. The determining means 123 can, for example, specify other users who have highly valued a specific candidate for the partner (such as, for example, a user who has evaluated a satisfactory level of the candidate for the partner as high and a user who has evaluated an evaluation score of the candidate for the partner as higher than an average value) with reference to the database unit 200 that stores results of communication performed by each candidate for the partner in the past and specify features of the other users. The features can be considered as features of a person who is expected to highly value each candidate for the partner, and thus, can be regarded as the second feature that the partner should have in communication with the candidate for the partner.

The second feature includes, for example, features regarding gender, age and/or a job, but not limited to these. Preferably, the second feature includes features regarding a job. Information regarding the job includes, for example, an occupation, a career and information on an enterprise at which the person works, and the like, but not limited to these.

For example, in a case where people who highly values a specific candidate for the partner are specified by the determining means 123, respective features of the people may be set as the second feature, or features common to part or all of the people may be set as the second feature.

For example, in a case where a user C who highly evaluates a specific candidate for the partner has features of a female, forties, a sales position, and a manufacturing business, and a user D who highly evaluates the candidate for the partner has features of a female, fifties, a development position, and a manufacturing business, the determining means 123 may, for example, set a female, forties or fifties, a sales position or a development position, and a manufacturing business as the second feature or may set a female and a manufacturing business as the second feature.

The determining means 123 can determine at least one partner from a plurality of candidates for the partner based on whether or not the user has each of the second feature after specifying the second feature of each of the plurality of candidates for the partner.

For example, in a case where the second feature of a first candidate for the partner is specified as a female and a manufacturing business, the second feature of a second candidate for the partner is specified as a male, twenties, and a development position, and the second feature of a third candidate for the partner is specified as forties and a restaurant business, and in a case where the user has features of a male, twenties, a development position and a manufacturing business, the second candidate for the partner can be determined as the at least one partner among the first to the third candidates for the partner.

The at least one partner determined in this manner can be a partner for whom it is expected that the user will evaluate highly and can be a partner who is expected to be highly evaluated by the user. It can be highly expected that the user can perform highly satisfactory communication by performing communication with the partner.

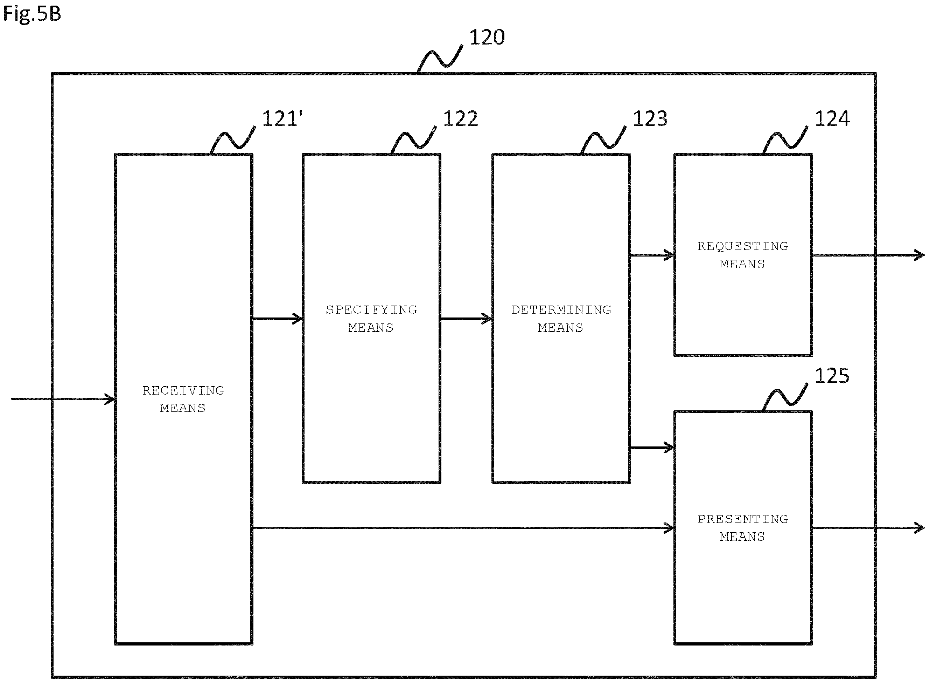

Figure 5B illustrates an example of a configuration of a processor unit 120' that is an alternative embodiment of the processor unit 120. The processor unit 120' has a configuration similar to the configuration of the processor unit 120 except that a requesting means 124 and a presenting means 125 are provided. The processor unit 120' can transmit a request to the determined at least one partner and present the partner who has approved the request to the user. In Figure 5B, the same reference numerals are assigned to components that are the same as the components illustrated in Figure 5A, and detailed description will be omitted here.

The processor unit 120' includes a receiving means 121', the specifying means 122, the determining means 123, the requesting means 124, and the presenting means 125.

The requesting means 124 is configured to transmit a request for communication with the user to the at least one partner determined by the determining means 123. The requesting means 124 can, for example, transmit the request for communication with the user to the at least one partner determined by the determining means 123 via the interface unit 110. The request for communication with the user includes the content of the communication desired by the user. If the terminal device 300 of the at least one partner receives this request, the content of the communication desired by the user is displayed, for example, on the recruitment content display screen 20 illustrated in Figure 1B.

In the request for communication with the user, it is preferable that the user is anonymously indicated, and that the attribute of the user is simple enough to make it impossible to identify a specific enterprise and/or a business title. This can protect personal information of the user and enables a person who receives the request to determine whether or not to approve the request without having a prejudice by the real name and the attribute of the user.

In a case where the at least one partner who has received the request approves the request, approval of the request is transmitted from the terminal device 300 of the at least one partner to the computer system 100.

The receiving means 121' has a configuration similar to the configuration of the receiving means 121 and is further configured to be able to receive the approval of the request transmitted from the at least one partner. The received approval of the request is passed to the presenting means 125.

The presenting means 125 is configured to present the at least one partner who has approved the request to the user as the partner of the communication in response to the approval of the request. The presenting means 125 can, for example, transmit a list of the at least one partner who has approved the request to the user via the interface unit 110. If the terminal device 300 of the user receives this list, for example, the partners of the communication with the user are displayed on the candidate display screen 30 illustrated in Figure 1C.

When the at least one partner is presented to the user, the at least one partner is preferably anonymously indicated, and the attribute of the at least one partner is preferably simple enough make it impossible to identify a specific enterprise and/or a business title. This can protect personal information of the at least one partner and enables the user to determine the partner of the communication without having a prejudice by the real name or the attribute of the at least one partner.

If the user selects one or more people from the presented at least one partner, communication is started with the selected partner.

The partners of the communication to be presented to the user are partners who have already approved the request, and thus, the communication is rarely refused after one or more people are selected from the presented at least one partner. It is expected that the user can perform highly satisfactory communication by performing communication with the partner for whom it is expected that the user will evaluate highly, or a partner for whom it is expected that the user will evaluate highly and who is expected to be highly evaluated by the user.

Note that the respective components of the computer system 100 described above may be constituted with a single hardware component or may be constituted with a plurality of hardware components. In a case where the respective components are constituted with a plurality of hardware components, the respective hardware components may be connected in any aspect. The respective hardware components may be connected in a wireless manner or in a wired manner. The computer system 100 of the present invention is not limited to a specific hardware configuration. Constituting the processor units 120, 120' with analog circuits instead of digital circuits is also within the scope of the present invention. The configuration of the computer system 100 of the present invention is not limited to the above as long as the functions can be implemented.

### 3. Processing by computer system for determining partner of communication

Figure 6A is a flowchart indicating an example of processing 600 by the computer system 100 for determining a partner of communication. The processing 600 is executed at the processor unit 120 or the processor unit 120' of the computer system 100. A case will be described below using an example where the processing 600 is executed at the processor unit 120.

In step S601, the receiving means 121 of the processor unit 120 receives the content of the communication desired by the user. The receiving means 121 can, for example, receive the content of the communication desired by the user, acquired from outside of the computer system 100 via the interface unit 110. The content of the communication desired by the user can be, for example, content of consultation input by the user on the consultation content input screen 10 illustrated in Figure 1A. The content of the communication desired by the user includes a topic that the user wants to talk about in the communication and/or response of the partner desired by the user in the communication.

The response of the partner desired by the user in the communication may be, for example, specific behavior or specific attitude. In one example, the desired response can be, for example, "giving a specific advice", "thinking together", "listening to the user's story", "giving an opinion", "discussing", and the like.

The received content of the communication desired by the user is passed to the specifying means 122.

In step S601, the receiving means 121 may further receive content of the career desired by the user. The received content of the career desired by the user is passed to the determining means 123.

In step S602, the specifying means 122 of the processor unit 120 specifies the first feature that the partner of the communication should have based on results of communication performed by the user in the past and/or results of communication performed by other users similar to the user in the past.

The specifying means 122 first determines whether or not the results of communication performed by the users in the past are stored in the database unit 200 with reference to the database unit 200. In a case where it is determined that the results of communication performed by the user in the past are stored in the database unit 200 (for example, in a case where the user has utilized an application for determining a person to consult), the specifying means 122 specifies the first feature that the partner of the communication should have based on the results of communication performed by the user in the past and/or the results of communication performed by other users similar to the user in the past. In a case where it is determined that results of communication performed by the user in the past are not stored in the database unit 200 (for example, in a case where the user utilizes an application for determining a person to consult for the first time), the specifying means 122 specifies the first feature that the partner of the communication should have based on the results of communication performed by other users similar to the user in the past.

In a case where the first feature that the partner of the communication should have is specified based on the results of communication performed by other users similar to the user in the past, the specifying means 122 can, for example, specify other users similar to the user by referring to the database unit 200 that stores features of each user. The specifying means 122 can, for example, specify users having the same features as at least part of the features of the user (for example, features regarding age, gender and a job).

The specifying means 122 can, for example, specify other users who are highly evaluated by the user (such as, for example, other users for whom the user has evaluated satisfactory levels as high and other users for whom the user has evaluated evaluation scores as higher than an average value) by referring to the database unit 200 that stores the results of communication performed by the user in the past and/or the results of communication performed by the other users similar to the user in the past and specify features of the other users. The features can be considered as features of a partner who is expected to be highly evaluated by the user, and thus, can be regarded as the first feature that the partner of the communication with the user should have.

For example, in a case where a plurality of other users who are highly evaluated by the user are specified by the specifying means 122, each feature of the plurality of users may be set as the first feature or features common to part or all of the plurality of users may be set as the first feature.

In step S603, the determining means 123 of the processor unit 120 determines at least one partner based on the content of the communication desired by the user and the first feature. The determining means 123 can, for example, determine a person who has the first feature and who can deal with the content of the communication desired by the user as the at least one partner.

The determining means 123 can specify the person who can deal with the content of the communication desired by the user by referring to the database unit 200 that stores results of communication in the past.

The determining means 123 can, for example, determine the at least one partner by extracting people having the first feature with reference to the database unit 200 and narrowing down the extracted people to people who can deal with the content of the communication desired by the user. Alternatively, the determining means 123 can, for example, determine the at least one partner by extracting people who can deal with the content of the communication desired by the user with reference to the database unit 200 and narrowing down the extracted people to people having the first feature. Alternatively, the determining means 123 can, for example, extract people who can deal with the content of the communication desired by the user and who have the first feature with reference to the database unit 200 and determine the extracted people as the at least one partner.

The at least one partner determined in this manner is a partner for whom it is expected that the user will evaluate highly, and it can be expected that the user can perform highly satisfactory communication by performing communication with the partner.

In a case where the content of the career desired by the user is also received in step S601, in step S603, the determining means 123 can determine the at least one partner further based on the content of the career desired by the user in addition to the content of the communication desired by the user and the first feature. The determining means 123 can, for example, determine a person having a career that matches at least part of the content of the career desired by the user as the at least one partner. Preferably, the determining means 123 can determine a person having a career that matches all of the content of the career desired by the user as the at least one partner. By this means, the determined at least one partner becomes a partner who has achieved a career image that the user wants to be in the future. The user can get to hear about an idea of the partner who has achieved a career image that the user wants to be in the future by performing communication with the partner and can make use of this in forming the career of the user.

Figure 6B indicates a flowchart of processing in step S603 in an embodiment in which the plurality of candidates for the partner are narrowed down to the at least one partner. The processing in step S603 is executed by the determining means 123 of the processor unit 120 or the processor unit 120' as described above.

In step S6031, the determining means 123 extracts a plurality of candidates for the partner (n candidates for the partner) based on the content of the communication desired by the user and the first feature. Here, n is an integer equal to or greater than 2. The determining means 123 can, for example, extract the plurality of candidates for the partner by extracting people having the first feature with reference to the database unit 200 and narrowing down the extracted people to people who can deal with the content of the communication desired by the user. Alternatively, the determining means 123 can, for example, extract the plurality of candidates for the partner by extracting people who can deal with the content of the communication desired by the user with reference to the database unit 200 and narrowing down the extracted people to people having the first feature. Alternatively, the determining means 123 can, for example, extract people who can deal with the content of the communication desired by the user and who have the first feature with reference to the database unit 200 and can set the extracted people as the plurality of candidates for the partner.

In step S6032, it is defined that i = 0, and j = 0.

In step S6033, i is incremented by 1.

In step S6034, the determining means 123 determines the second feature that a partner should have in communication with an i-th candidate for the partner based on results of communication performed by the i-th candidate for the partner in the past. The determining means 123 can, for example, specify other users who have highly evaluated the i-th candidate for the partner (such as, for example, other users who have evaluated satisfactory levels of the i-th candidate for the partner as high and other users who have evaluated evaluation scores of the i-th candidate for the partner as higher than an average value) by referring to the database unit 200 that stores results of communication performed by the plurality of users in the past and specify features of the other users. The features are considered as features of a person who is expected to highly evaluate the i-th candidate for the partner, and thus, can be considered as the second feature that the partner should have in the communication with the i-th candidate for the partner.

The second feature includes, for example, features regarding gender, age and/or a job, but not limited to these. Preferably, the second feature includes features regarding a job. Information regarding the job includes, for example, an occupation, a career, information on an enterprise at which the person works, and the like, but not limited to these.

For example, in a case where people who highly evaluate the i-th candidate for the partner are specified by the determining means 123, features of each of the people may be set as the second feature, or features common to part or all of the people may be set as the second feature.

The processing in step S6033 and step S6034 is repeated until the second feature is specified for all the n candidates for the partner. Thus, it is determined in step S6035 whether i is equal to n. In a case where i is not equal to n (in a case where i is smaller than n), a candidate for the partner for whom the second feature has not been specified still exists, and thus, the processing returns to step S6033, and the second feature is specified for the next candidate for the partner. In a case where i is equal to n, the second feature can be specified for all the n candidates for the person to consult, and thus, the processing can proceed to step S6036.

In step S6036, j is incremented by 1.

In step S6037, the determining means 123 determines whether or not the user has the same features as the second feature of a j-th candidate for the partner. In a case where it is determined that the user has the same features as the second feature of the j-th candidate for the partner, the processing proceeds to step S6038. In a case where it is determined that the user does not have the same features as the second feature of the j-th candidate for the partner, the processing proceeds to step S6039.

In step S6038, it is determined to set the j-th candidate for the partner as the at least one partner. This is because the user has the same features as the second feature of the j-th candidate for the partner, and thus, the j-th candidate for the partner is expected to be a partner who is to be highly evaluated by the user, and the user is highly likely to satisfy communication between the user and the j-th candidate for the partner.

In step S6039, it is determined that the j-th candidate for the partner is not set as the at least one partner. This is because the j-th candidate for the partner is not expected to be a partner that is to be highly evaluated by the user, and it cannot be said that the user is highly likely to satisfy communication between the user and the j-th candidate for the partner.

The processing from step S6036 to step S6038 or step S6039 is repeated until it is determined whether or not the user has the second feature for all the n candidates for the partner. Thus, in step S603A, it is determined whether j is equal to n. In a case where j is not equal to n (in a case where j is smaller than n), a candidate for the partner for whom determination has not been performed still exists, and thus, the processing returns to step S6036, and determination is performed for the next candidate for the partner. In a case where j is equal to n, determination has been performed for all the n candidates for the person to consult, and thus, the processing can proceed to step S603B.

In step S603B, processing in step S603 ends. By this means, at least one partner of the communication with the user is determined.

The at least one partner determined in this manner is a partner for whom it is expected that the user will evaluate highly and a partner who is expected to be highly evaluated by the user, and it can be highly expected that the user can perform highly satisfactory communication by performing communication with the partner.

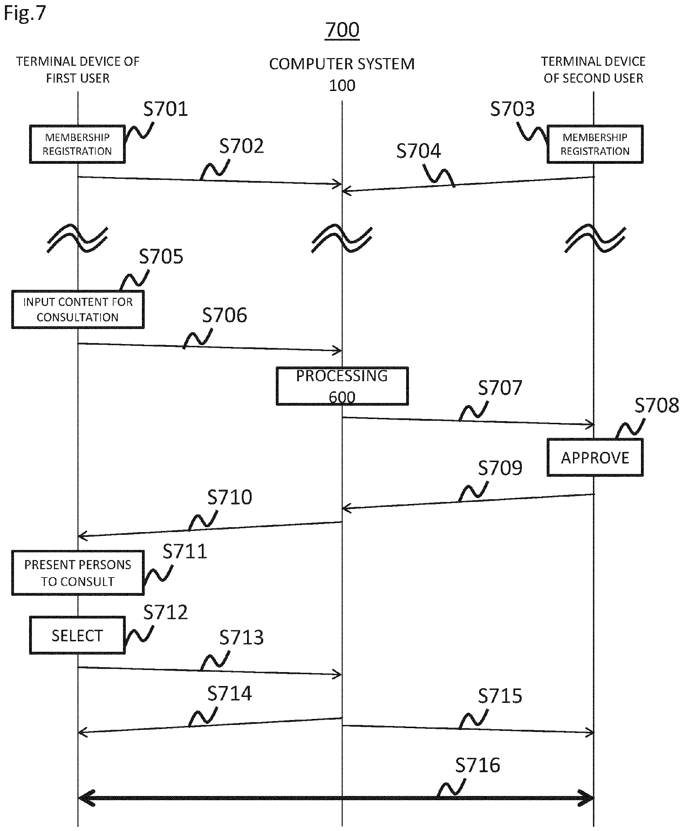

Figure 7 indicates an example of data flow 700 among the computer system 100 for determining a partner of communication, the terminal device of the first user, and the terminal device of the second user. The data flow 700 is provided for describing flow of determining a partner that the first user should communicate with by utilizing a service for determining a partner of communication provided by the computer system 100 and performing communication with the determined partner.

First, the first user and the second user perform registration for utilizing the service for determining a partner of communication.

In step S701, the first user inputs information for performing registration for utilization to the terminal device of the first user. For registration for utilization, the first user inputs at least information regarding the job of the first user to the terminal device of the first user. The first user may input personal information such as gender and age, user name, a password, a career image that the first user wants to be in the future (or the desired career content) in addition to this.

In step S702, the terminal device of the first user transmits the information input upon registration for utilization to the computer system 100. The registration for utilization of the first user is completed by the computer system 100 processing the transmitted information.

In step S703, the second user inputs information for performing registration for utilization to the terminal device of the second user. For registration for utilization, the second user inputs at least information regarding the job of the second user to the terminal device of the second user. The second user may input personal information such as gender and age, user name and a password in addition to this.

In step S704, the terminal device of the second user transmits the information input upon registration for utilization to the computer system 100. The registration for utilization of the second user is completed by the computer system 100 processing the transmitted information.

Then, the first user recruits a partner of communication (here, a person to consult).

In step S705, the first user inputs content of consultation to the terminal device of the first user. The first user can, for example, input the content of consultation on the consultation content input screen 10 illustrated in Figure 1A.

In step S706, the terminal device of the first user transmits the input content of consultation to the computer system 100.

If the computer system 100 receives the content of consultation, the processing 600 described above with reference to Figure 6A and Figure 6B is performed, and at least one partner is determined. It is assumed here that at least the second user is determined as the at least one partner.

In step S707, the requesting means 124 of the processor unit 120 of the computer system 100 transmits a request for communication with the first user to the terminal device of the second user via the interface unit 110. In the request for communication with the first user, the first user is anonymously indicated, and the attribute of the first user can be simple enough to make it impossible to identify a specific enterprise and/or a business title.

If the terminal device of the second user receives the request, the request is presented to the second user. For example, the request for communication with the first user is presented to the second user via the recruitment content display screen 20 illustrated in Figure 1B.

In step S708, the second user approves the request for communication with the first user. For example, the second user can approve the request for communication with the first user by selecting "become candidate" buttons 23, 24 on the recruitment content display screen 20 illustrated in Figure 1B.

In step S709, the terminal device of the second user transmits a fact that the second user has approved the request for communication with the first user to the computer system 100.

After the computer system 100 receives the fact of approval of the request for communication with the first user, in step S710, the presenting means 125 of the processor unit 120 of the computer system 100 transmits a list of people to consult to the first terminal device to present the second user as the person to consult.

In step S711, the terminal device of the first user presents the people to consult to the first user. For example, the people to consult are presented to the first user via the candidate display screen 30 illustrated in Figure 1C.

In step S712, the first user selects a person to consult with whom the first user wants to communicate with. For example, the first user can select the person to consult with whom the first user wants to communicate with by selecting "1on1 with this person!" buttons 33, 34 on the candidate display screen 30 illustrated in Figure 1C.

In step S713, the terminal device of the first user transmits a fact that the first user selects the second user as the person to consult.

In response to this, in step S714, the computer system 100 transmits a sign of start of communication with the second user to the terminal device of the first user, and in step S715, the computer system 100 transmits a sign of start of communication with the first user to the terminal device of the second user.

Then, in step S716, communication between the first user and the second user is started, and the first user becomes able to consult the second user. The communication between the first user and the second user may be performed on a dedicated screen provided by the computer system 100 or may be performed on another application that coordinates with the application. The communication between the first user and the second user may be performed, for example, only via speech, via video and speech (so-called video call or videophone call) or via text. Alternatively, the communication between the first user and the second user may be performed via an avatar that moves in accordance with action of the first user or the second user in place of video.

Note that while in the above-described example, a case has been described where the processing in the respective steps is performed in specific order, the order in which the processing in the respective steps is performed is not limited to the illustrated order. The processing in the respective steps can be performed in arbitrary logically possible order.

While in the example described above with reference to Figure 6A and Figure 6B, a case has been described where the processing in the respective steps indicated in Figure 6A and Figure 6B is implemented by the processor unit 120 (or the processor unit 120') and the program stored in the memory unit 130, the present invention is not limited to this. At least one of the processing in the respective steps indicated in Figure 6A and Figure 6B may be implemented by a hardware component such as a control circuit.

While in the above-described example, a case has been described as an example where the computer system 100 is implemented as a server device, the present invention is not limited to this. The computer system 100 can also be implemented with an arbitrary information terminal device (for example, the terminal device 300).

The present invention is not limited to the above-described embodiment. It can be understood that the scope of the present invention should be interpreted only by the claims. It can be understood that a person skilled in the art can implement an equivalent scope based on the description of the present invention and technical common knowledge from the description of the specific preferred embodiment of the present invention.

### Industrial Applicability

The present invention is useful in providing a computer system, and the like, capable of determining a partner that a user should communicate with, such as a partner who goes well with the user, a partner who can appropriately provide an advice to a matter for consultation of the user and a partner who can respond well as desired by the user.

### Reference Signs List

- 10: Consultation content input screen
- 20: Recruitment content display screen
- 30: Candidate display screen
- 40: Profile display screen
- 100: Computer system
- 110: Interface unit
- 120: Processor unit
- 130: Memory unit
- 200: Database unit
- 300: Terminal device
- 400: Network

## Claims

1. A computer system for determining a partner of communication, the computer system comprising:
a receiving means that receives content of communication desired by a user;
a specifying means that specifies a first feature that the partner of the communication should have based on results of communication performed by the user in past and/or results of communication performed by other users similar to the user in past; and
a determining means that determines at least one partner based on the content of the communication desired by the user and the first feature.

2. The computer system according to claim 1,
wherein the determining means;
extracts a plurality of candidates for the partner based on the content of the communication desired by the user and the first feature,
for each candidate for the partner of the plurality of candidates for the partner, specifies a second feature that a partner should have in communication with the candidate for the partner based on results of communication performed by the candidate for the partner in past, and
determines the at least one partner from the plurality of candidates for the partner based on whether or not the user has the second feature of each of the plurality of candidates for the partner.

3. The computer system according to claim 1 or 2,
wherein the content of the communication desired by the user includes a topic that the user wants to talk about in the communication and/or response of the partner desired by the user in the communication.

4. The computer system according to any one of claims 1 to 3,
wherein the first feature includes a feature regarding a job.

5. The computer system according to claim 4,
wherein the feature regarding the job includes a career.

6. The computer system according to claim 5,
wherein the receiving means further receives content of a career desired by the user, and
the determining means determines the at least one partner further based on the content of the career.

7. The computer system according to any one of claims 1 to 6, further comprising:
a requesting means that transmits a request for communication with the user to the determined at least one partner; and
a presenting means that presents the at least one partner who has approved the request to the user as the partner of the communication in response to approval of the request by the at least one partner.

8. The computer system according to claim 7,
wherein the user is anonymously indicated in the request, and
the at least one partner is anonymously presented to the user.

9. A method for determining a partner of communication, the method comprising:
receiving content of communication desired by a user;
specifying a first feature that the partner of the communication should have based on results of communication performed by the user in past and/or results of communication performed by other users similar to the user in past; and
determining at least one partner based on the content of the communication desired by the user and the first feature.

10. A program for determining a partner of communication, the program being executed in a computer system including a processor unit, and the program causing the processor unit to execute processing comprising:
receiving content of communication desired by a user;
specifying a first feature that the partner of the communication should have based on results of communication performed by the user in past and/or results of communication performed by other users similar to the user in past; and
determining at least one partner based on the content of the communication desired by the user and the first feature.
